# EUROPEAN PATENT SPECIFICATION

(11) **EP 1 367 016 B1**
(45) Date of publication and mention of the grant of the patent: **24.10.2007**
(21) Application number: 03253146.9
(22) Date of filing: 20.05.2003
(51) Int. Cl.: B65H 75/36, A01D 34/82, A01D 43/063

(54) **Lawnmower with a cable storage device**
Rasenmäher mit einer Kabelwickeleinrichtung
Tondeuse à gazon avec un dispositif de rangement de câble

(30) Priority: 21.05.2002 GB 0211653
(43) Date of publication of application: 03.12.2003
(73) Proprietor: Husqvarna UK Limited, County Durham, DL5 6UP (GB)
(72) Inventor: Bowden, Michael, Newton Aycliffe, Co. Durham DL5 4XF (GB); Zwolinski, Paul, Northallerton, North Yorkshire DL7 8FE (GB); Trevor, Michael Darmon, Co. Durham DL3 8UF (GB)
(74) Representative: Pratt, David Martin

(56) References cited:
- EP-A- 0 374 069
- DE-A- 1 507 425
- DE-A- 4 406 583
- US-A- 1 469 603
- US-A- 2 728 182
- US-A- 3 757 503
- US-A- 4 136 840

## Description

This invention relates to a lawnmower having a cable storage device according to the preamble of claim 1.

An electric lawnmower is usually supplied with power from the main electric supply via a separate electric cable, that is to say an electric cable that is electrically and mechanically detachable from an electric connector provided on the lawnmower. Such an arrangement gives rise to two main problems, namely that of knowing where the cable is located when the lawnmower is to be used, and keeping the cable tidy for ease of use. Often, a user does not have any formal method of storing the cable after use, and it is stored twisted and tangled, and separate from the lawnmower. Thus, the next time the mower is to be used, the cable has first to be found, and then untwisted and untangled. These tasks are often frustrating and time consuming.

Cable storage devices designed for storing electric cables for lawnmowers are known. Typically such a device coils the cable to eliminate tangling, but does not stop the cable twisting. Consequently, such devices do not offer the best storage solution. Moreover, these known devices are separate stand-alone devices, and so tend to be stored away from the lawnmower itself, and this can lead to problems of knowing where the cable is located when the lawnmower is to be used.

EP-A-0374069 describes a known cable storage device for a lawnmower.

The aim of the invention is to provide an improved cable storage device for an electrically-powered lawnmower.

The present invention provides a lawnmower having a grass-box and a main body structure housing an electric motor and a cutting chamber, and a cable storage device the devices comprising a spool for storing an electric cable in a wound-on configuration, the spool being rotatably mounted in a spool holder, wherein the spool holder is integrally formed with the grass-box of the lawnmower.

Advantageously, the spool is rotatably mounted in a complementary recess formed in the spool holder.

In a preferred embodiment, the grass-box is provided with a lid, and the spool holder forms part of the lid.

Preferably, the spool is constituted by a pair of end plates and a central hub, one end plate being substantially circular and the other end plate being substantially annular.

Conveniently, the annular end plate co-operates with an upstanding boss formed centrally within the recess of the spool holder in such a manner that the annular end plate rests on the base of the recess. Preferably, the central hub of the spool and the upstanding boss are formed with aligned apertures, and wherein the spool is rotatably retained within the recess by means of a pin positioned within the aligned apertures.

Advantageously, the circular plate is formed with a recessed portion sized and shaped to receive an electric connector provided at the lawnmower end of the electric cable.

Preferably, the device further comprises an upstanding knob formed on the circular plate, the knob being radially offset from the centre of the plate. The spool can be rotated relative to the spool holder using the knob.

The spool holder may be formed with a slot in the side wall defining its recess, the slot constituting means for the electric cable to access the storage area of the spool. Preferably, the spool holder is formed with a depression adjacent to the slot, the depression being sized and shaped to receive an electric plug provided at the mains end of the electric cable.

In a preferred embodiment, the device further comprises a cable guide mounted in the lid adjacent to the slot in the side wall of the spool holder. Advantageously, the cable guide is sized and shaped to define a channel between itself and an adjacent portion of the lid, and preferably the channel has a width which is slightly greater than the diameter of the cable.

The cable guide is provided to ensure that, whilst the cable is being either wound onto, or unwound from, the spool, it is prevented from leaving the channel and forcing its way into the gap between the outer peripherary of the spool and the recess forming the spool holder, and consequently becoming jammed.

Preferably, the cable guide is formed with a downwardly-projecting guide member, and the lid is formed with a cable-engaging, downwardly-extending wall which, in use, co-operates with the guide member to prevent the cable escaping from the channel when the cable is wound onto or off the spool. Conveniently, the downwardly-depending guide member is provided on that side of the cable guide adjacent to the channel.

Advantageously, the cable guide is provided with a second downwardly-depending guide member spaced from the first guide member and positioned on that side of the cable guide remote from the channel.

Preferably, the first and second guide members and the underneath surface of the cable guide therebetween define radiused surfaces in the horizontal and vertical planes. These radisued surfaces of the cable guide allow the cable to be unwound from the spool by the user pulling the cable away in a variety of directions.

The device may further comprise a spring for storing energy produced as the cable is unwound, the release of said energy being usable to rewind the cable. Conveniently, the spring is a clock spring, one end of which is fixed to the spool, the other end being fixed to the spool holder.

Each of the spool and the spool holder may comprise a one-piece or a two-piece injection moulding made of a plastics material such as ABS or polypropylene.

The invention will now be described in greater detail, by way of example, with reference to the drawings, in which:-
Figure 1 is a perspective view of the grass-box lid of a lawnmower, the lid incorporating a first form of cable storage device constructed in accordance with the invention, the device having a cable winder spool and an electrical cable wound thereon;
Figure 2 is a perspective view of the grass-box lid of Figure 1 without the cable winder spool and cable;
Figure 3 is a perspective view of the cable winder spool of Figure 1, shown without the cable;
Figure 4 is a perspective view of the upper part of a lawnmower, showing its lid incorporating a second form of cable storage device constructed in accordance with the invention;
Figure 5 is a perspective view of the upper part of a modified form of the lawnmower of Figure 4; and
Figure 6 is an enlarged, schematic section view of part of the cable storage device of Figure 5.

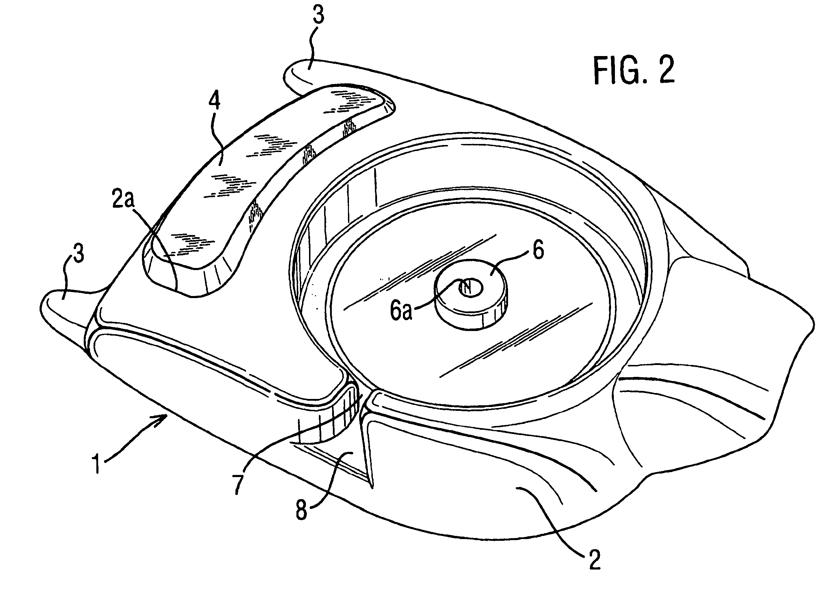

Referring to the drawings, Figure 2 shows a lid 1 of a grass-box (not shown) of a lawnmower (not shown). The lawnmower has a main body structure (not shown) having an electric motor (not shown) and a cutting device (not shown). The lid 1 is made of plastics material such as ABS or polypropylene, and comprises a main body portion 2 which can be pivotally attached to the lawnmower by means of a pair of lugs 3 at one end thereof. A transparent panel 4 made of plastics material is fixed within an aperture 2a in the main body portion 2, to enable the user of the lawnmower to see the level of cut grass within a grass box (not shown) positioned beneath the lid 1. The main body portion 2 of the lid 1 is formed with a generally cylindrical recess 5 having an upstanding boss 6 at its centre. The boss 6 is formed with an axial aperture 6a. One side wall of the recess 5 is formed with an aperture 7 leading to a depression 8 in the upper surface of the adjacent portion of the lid 1. The main body portion 2 of the lid 1 is a one-piece moulding.

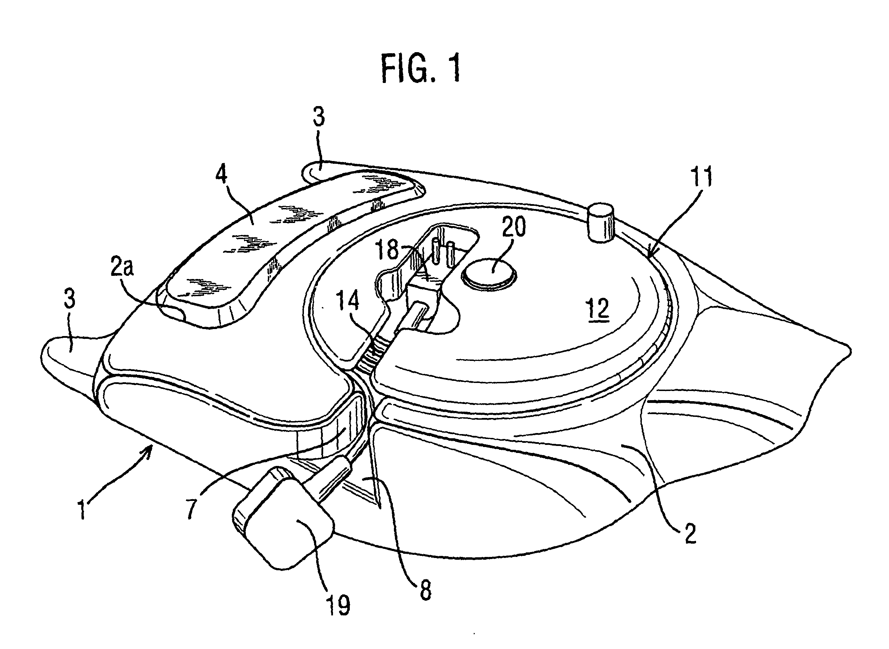

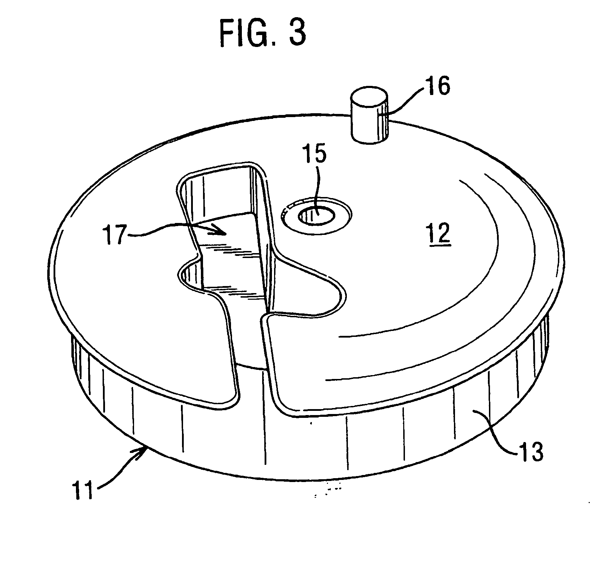

Figure 3 shows a cable winder spool 11 for use with the lid 1. The spool 11 is constituted by an upper, circular end plate 12, a lower annular end plate 13, and a central cylindrical member (not shown) which connects the two end plates, thereby defining an annular storage area for an electric cable 14 (see Figure 1). The cable winder spool 11 is an injection moulding or mouldings made from a plastics material such as ABS or polypropylene. An axial through-bore 15 passes through the two end plates 12 and 13 and the central cylindrical member. The upper end plate 12 is formed with an upstanding knob 16, and with a recess 17 shaped to receive a connector 18 (see Figure 1) provided at one end of the electric cable 14, this connector being complementary to the connector provided on the lawnmower for feeding electric power to its electric motor. A standard mains electric plug 19 is attached to the other end of the cable 14.

The end plates 12 and 13 are sized to be a loose fit within the recess 5 of the lid 1, so that, when the spool 11 is positioned within the recess, its through bore 15 is in alignment with the aperture 6a in the boss 6, and so that the spool is freely rotatable within the recess. The end plate 13 is generally annular in configuration, so that it can rest on the base of the recess 5 without touching the upstanding boss 6. In use, the spool 11 is held within the recess 5 by means of a pin 20 (only the enlarged head portion of which can be seen in Figure 1) which passes through the bore 15 and into the aperture 6a. Alternatively, the pin 20 could be integrally formed with the spool 11.
Figure 1 shows the spool 11 positioned within the recess 5 of the lid 1, the spool being held in position by the pin 20. The cable connector 18 is positioned within its recess 17, after the cable 14 has been passed through the aperture 7 in the grass-box lid 1. The cable 14 is then wound fully onto the spool 11, until the plug 19 is drawn into the depression 8 for storage.

When the lawnmower is to be used, the cable 14 is removed from the spool 11 by pulling on the plug 19 or that portion of the cable adjacent thereto. This causes the spool 11 to rotate within the recess 5 thereby unwinding the cable. When the cable 14 is fully unwound, the plug 19 can be inserted into a mains electrical socket, and the connector 18 can be removed from the recess 17 and mated with the complementary connector on the lawnmower. The power can then be turned on at the mains socket, prior to starting the electric motor using a switch provided on the handle of the lawnmower.

When use of the lawnmower is over, the connector 18 is disconnected from the complementary connector on the lawnmower and positioned within the recess 17. The cable 14 is then passed through the aperture 7 in the grass-box lid 1, the plug 19 is disconnected from the mains socket, and the cable is wound onto the spool 11 by rotating the spool within the recess 5 using the knob 16. The plug 19 is then positioned within the depression 8, so that the lawnmower is ready for storage with the cable 14 stored in a tidy manner.

The aperture 7 and the depression 8 define a guide feature for feeding the cable 14 evenly onto the spool 11 as it is wound on. Thus, this guide has a large smooth opening defined by the inclined side walls 8a of the depression 8, so that the cable 14 can be collected from different directions. Moreover, during the unwinding process when the cable 14 is being removed from the spool 11 for connection to the mains electricity supply, this guide allows the cable to be removed easily without snagging.

Another advantage of the cable storage described above is that the connector 18 can easily be housed within the recess 17 in the top of the spool 11, thereby preventing it falling to the ground and being damaged when the lawnmower is moved to and from the lawn from its storage position. Furthermore, because the connector 18 is a snug fit within the recess 17, the user will experience a sudden resistance to unwinding when the cable 14 is fully unwound, thereby providing the user with an indication that the cable is fully unwound.

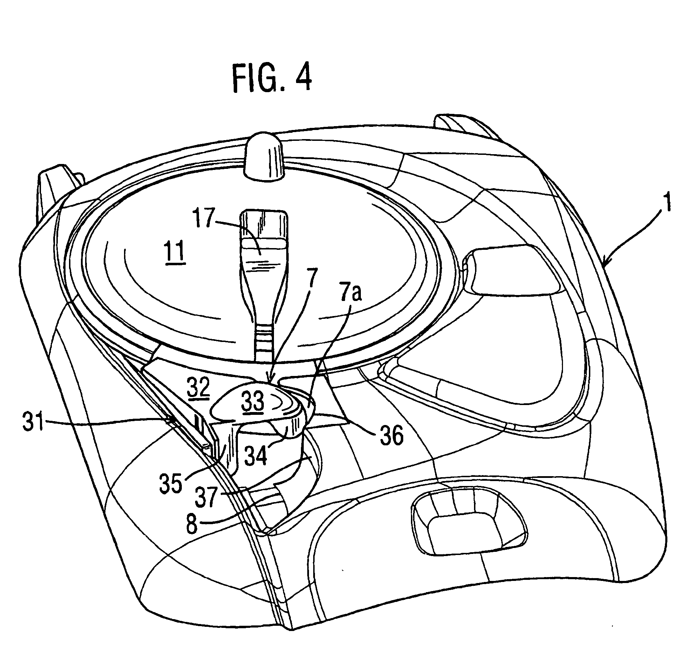

Figure 4 shows a lawnmower grass-box lid which is a modified version of that shown in Figure 2. Accordingly, like reference numerals will be used for like parts, and only the modifications will be described in detail. The main modification is the provision of a cable guide, indicated generally by the reference numeral 31, positioned in the aperture 7 between the depression 8 and the recess 17. The cable guide 31 has a generally trapezoidal portion 32 and a hook-shaped portion 33 integrally formed therewith. The trapezoidal portion 32 of the cable guide 31 is a snap fit within a complementary recessed portion of the lid 1, and is held in place therein by means of a screw boss (not shown). The hook-shaped portion 33 has downwardly-depending projections 34 and 35, the portion 34 co-operating with, and complementing the shape of, a curved wall portion 36 of the lid 1, that wall portion delimiting the aperture 7. The projection 34 and the wall 36 define a channel 7a therebetween, this channel having a width which is slightly greater than the diameter of the cable 14 (not shown). The underneath surface of the hook-shaped portion 33 is formed with smooth radiused surfaces in both horizontal and vertical planes. The lid 1 is formed with a curved wall 37 at the exit of the channel 7a in the region of the depression 8, this wall be off-set with respect to the general direction of the channel 7a towards the projection 35.

In use, for easy insertion and winding of the cable 14 onto the spool 11, the spool is positioned as shown in Figure 4. That is to say with the recess 17 in alignment with the inner end of the channel 7a. The mower connector 18 (not shown) is then positioned in the recess 17, and the cable 14 is placed into the channel 7a and hooked under the hook-shaped portion 33 of the cable guide 31. The cable 14 is thus positioned between the projections 34 and 35, so that the spool 11 can be rotated clockwise or anti-clockwise to coil the cable onto the spool.

The spool 11 should preferably be rotated clockwise, as this will tend to move the cable 14 towards the projection 35 and away from the channel 7a. However, even if the spool 11 is rotated anti-clockwise, and the cable 14 moves towards the projection 34, the off-set wall 37 prevents the cable from its engagement with the underneath surface of the hook-shaped portion 33 of the cable guide 32. The cable 14 is thereby held underneath the hook-shaped portion 33 between the two projections 34 and 35 as the cable is wound onto the spool 11. When all the cable 14 has been wound onto the spool 11, the plug 19 is pulled into the depression 8 for storage.

In order to remove the cable 14 from the spool 11 for connection to the mower, the plug 19 is gripped and pulled. The cable 14 can be pulled from any position relative to the spool 11, and will uncoil smoothly owing to its engagement with the smoothed radiused surfaces of the underneath surface of the hook-shaped portion 33 of the cable guide 31. As the cable 14 is unwound, the spool 11 will rotate in an anti-clockwise direction (if the cable is wound thereon in a clockwise direction) and in an clockwise direction (if the cable was wound thereon in a anti-clockwise direction). As with the winding on process, the cable 14 is maintained underneath the hook-shaped portion 33 of the cable guide 31 at all times, owing to relative positions for the projections 34 and 35 and the off-set wall 37. Consequently, the cable 14 is prevented from escaping from the cable guide 31, and hence from escaping from the channel 7a, during unwinding. Again, as with the winding process, the cable 14 is prevented from moving away from the underneath side of the hook-shaped portion 33 of the cable guide 31 whichever way the spool 11 rotates during unwinding.

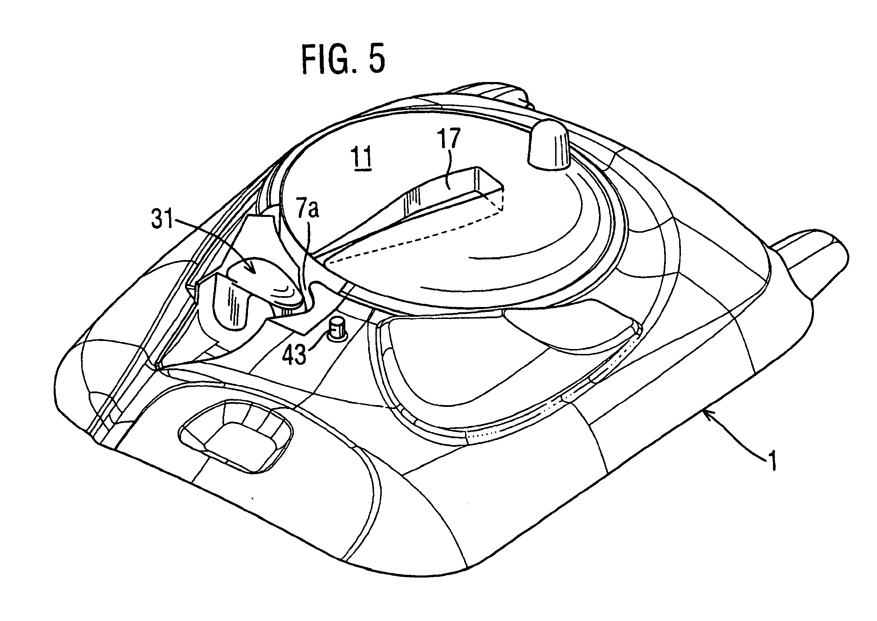

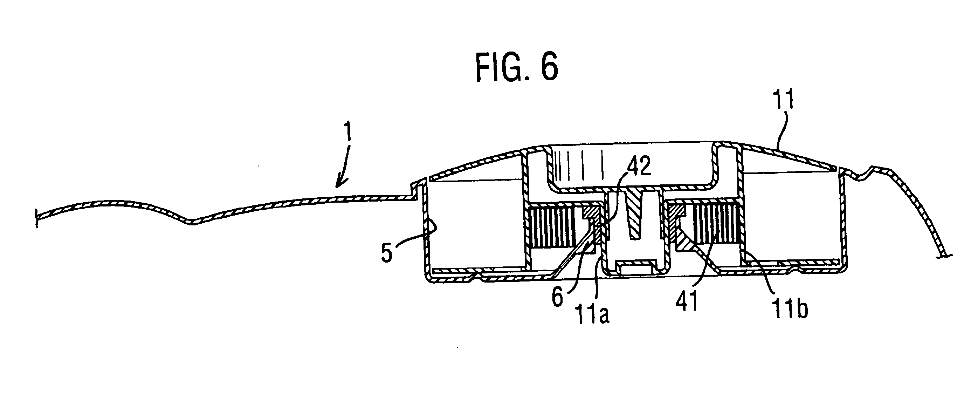

Figure 5 shows a lawnmower lid which is a modified version of that shown in Figure 4. Accordingly, like reference numerals will be used for like parts, and only the modifications will be described in detail. The main modification is the provision of a spring 41 (see Figure 6) for automatically winding the cable 14 onto the spool 11 after use of the lawnmower. Figure 6 shows the rotatable mounting of the lid 11 within the recess 5 of the lid 1, the spool being provided with a central, downwardly-depending boss 11a which is rotatable within the boss 6 of the lid. A bearing 42 is provided between the two bosses 6 and 11a. The spring 41, which is a clock spring, surrounds the bearing 42, its inner end being connected to a cylindrical wall 11b depending downwardly from the upper portion of the spool 11, the outer end of the spring being connected to the lid 1. A latch mechanism (not shown) is connected between the spool 11 and the lid 1. When engaged, the latch mechanism allows the spool 1 to be rotated in the anticlockwise direction, but prevents rotation of the spool in the clockwise direction. A button 43 (see Figure 5) is provided to operate the latch mechanism.

When the cable 14 is unwound from the spool 11, the spring 41 is tensioned by the relative rotation between the spool and the lid 1. The cable 14 can then be connected to the lawnmower for grass cutting. When it is required to put the lawnmower away, and store the cable 14 on the spool 11, the connector 18 is placed in its recess 17, the cable is pushed into the channel 7a and under the cable guide 31. The button 43 is then depressed to release the latch mechanism thereby releasing the tension in the spring 41 and turning the spool 11 to coil the cable 14 onto it.

It will be apparent that modifications could be made to the cable storage device described above. For example, where the connector 18 is permanently attached to the complementary connector on the lawnmower, or where the cable 14 is permanently wired in to the motor of the lawnmower. To facilitate this type of construction, the spool assembly would include slip ring electrical contacts that allow the flow of an electric current between the rotating spool 11 and the static spool holder (the recess 5 in the lid 1. Additionally, the spool holder would have a generally smooth upper surface, the recess 17 being then unnecessary. It will also be apparent that the cable storage device could be used with many different types of lawnmower, though the actual grass-box lid shape would differ for each different lawnmower.

## Claims

1. A lawnmower comprising a grass-box, a main body structure housing an electric motor and a cutting chamber, and a cable storage device comprising a spool (11) for storing an electric cable (14) in a wound-on configuration, the spool being rotatably mounted in a spool holder (2), **characterised in that** the spool holder is integrally formed with the grass-box of the lawnmower on an outside surface thereof.

2. A lawnmower as claimed in claim 1, wherein the spool (11) is rotatably mounted in a complementary recess (5) formed in the spool holder (2).

3. A lawnmower as claimed in claim 1 or claim 2, wherein the grass-box is provided with a lid (1), and the spool holder (2) forms part of the lid.

4. A lawnmower as claimed in any one of claims 1 to 3, wherein the spool (11) is constituted by a pair of end plates (12, 13) and a central hub.

5. A lawnmower as claimed in claim 4, wherein one end plate (12) is substantially circular, and the other end plate (13) is substantially annular.

6. A lawnmower as claimed in claim 5, wherein the annular end plate (13) co-operates with an upstanding boss (6) formed centrally within the recess (5) of the spool holder (2) in such a manner that the annular end plate rests on the base of the recess.

7. A lawnmower as claimed in claim 6, wherein the central hub of the spool (11) and the upstanding boss (6) are formed with aligned apertures (15, 6a), and wherein the spool is rotatably retained within the recess by means of a pin (20) positioned within the aligned apertures.

8. A lawnmower as claimed in claim 6 or claim 7, wherein the circular plate (12) is formed with a recessed portion (17) sized and shaped to receive an electric connector (18) provided at the lawnmower end of the electric cable (14).

9. A lawnmower as claimed in any one of claims 6 to 8, further comprising an upstanding knob (16) formed on the circular plate (12), the knob being radially offset from the centre of the plate.

10. A lawnmower as claimed in claim 2, or in any one of claims 3 to 9 when appendant to claim 2, wherein the spool holder (2) is formed with a slot (7) in the side wall defining its recess (5), the slot constituting means for the electric cable to access the storage area of the spool (11).

11. A lawnmower as claimed in claim 10, wherein the spool holder (2) is formed with a depression (8) adjacent to the slot (7), the depression being sized and shaped to receive an electric plug (19) provided at the mains end of the electric cable (14).

12. A lawnmower as claimed in claim 10 or claim 11, further comprising a cable guide (31) mounted in the lid (1) adjacent to the slot (7) in the side wall of the spool holder (2).

13. A lawnmower as claimed in claim 12, wherein the cable guide (31) is sized and shaped to define a channel (7a) between itself and an adjacent portion of the lid (1).

14. A lawnmower as claimed in claim 13, wherein the channel (7a) has a width which is slightly greater than the diameter of the cable (14).

15. A lawnmower as claimed in claim 13 or claim 14, wherein the cable guide (31) is formed with a downwardly-projecting guide member (34), and the lid (1) is formed with a cable-engaging, downwardly-extending wall (36) which, in use, co-operates with the guide member to prevent the cable (14) escaping from the channel (7a) when the cable is wound onto or off the spool.

16. A lawnmower as claimed in claim 15, wherein the downwardly-depending guide member (34) is provided on that side of the cable guide (31) adjacent to the channel (7a).

17. A lawnmower as claimed in claim 16, wherein the cable guide (31) is provided with a second downwardly-depending guide member (35) spaced from the first guide member (34) and positioned on that side of the cable guide remote from the channel (7a).

18. A lawnmower as claimed in claim 17, wherein the first and second guide members (34, 35) and the underneath surface of the cable guide (31) therebetween define radiused surfaces in the horizontal and vertical planes.

19. A lawnmower as claimed in any one of claims 1 to 18, further comprising a spring (41) for storing energy produced as the cable (14) is unwound, the release of said energy being usable to rewind the cable.

20. A lawnmower as claimed in claim 19, wherein the spring (41) is a clock spring, one end of which is fixed to the spool (11), the other end being fixed to the spool holder (2).

21. A lawnmower as claimed in any one of claims 1 to 20, wherein the spool (11) is a one-piece or a two-piece injection moulding made of a plastics material.

22. A lawnmower as claimed in any one of claims 1 to 21, wherein the spool holder (2) is a one-piece moulding made of a plastics material.

23. A lawnmower as claimed in claim 21 or claim 22, wherein the plastics material is ABS or polypropylene.

## Patentansprüche

1. Rasenmäher mit einem Grasfangkorb, einem Hauptgehäuseaufbau, in welchem ein Elektromotor und eine Schneidekammer angeordnet sind, und einer Kabellagervorrichtung mit einer Spule (11) zum Lagern eines Elektrokabels (14) in einer aufgewickelten Konfiguration, wobei die Spule in einem Spulenhalter (2) drehbar befestigt ist, **dadurch gekennzeichnet, dass** der Spulenhalter mit dem Grasfangkorb des Rasenmähers auf einer Außenfläche desselben einstückig gebildet ist.

2. Rasenmäher nach Anspruch 1, wobei die Spule (11) drehbar in einer im Spulenhalter (2) gebildeten komplementären Ausnehmung (5) befestigt ist.

3. Rasenmäher nach Anspruch 1 oder 2, wobei der Grasfangkorb mit einem Deckel (1) versehen ist und der Spulenhalter (2) einen Teil des Deckels bildet.

4. Rasenmäher nach einem der Ansprüche 1 bis 3, wobei die Spule (11) aus einem Paar Endplatten (12, 13) und einer Mittelnabe besteht.

5. Rasenmäher nach Anspruch 4, wobei eine Endplatte (12) im Wesentlichen kreisförmig und die andere Endplatte (13) im Wesentlichen ringförmig ist.

6. Rasenmäher nach Anspruch 5, wobei die ringförmige Endplatte (13) mit einem aufrechten, runden Vorsprung (6) zusammenwirkt, welcher innerhalb der Ausnehmung (5) des Spulenhalters (2) derart zentral gebildet ist, dass die ringförmige Endplatte auf der Basis der Ausnehmung aufliegt.

7. Rasenmäher nach Anspruch 6, wobei die Mittelnabe der Spule (11) und der aufrechte, runde Vorsprung (6) mit ausgerichteten Öffnungen (15, 6a) gebildet sind und die Spule innerhalb der Ausnehmung durch einen Stift (20) drehbar gehalten wird, welcher innerhalb den ausgerichteten Öffnungen positioniert ist.

8. Vorrichtung nach Anspruch 6 oder 7, wobei die kreisförmige Platte (12) mit einem ausgesparten Abschnitt (17) gebildet ist, welcher zum Aufnehmen eines elektrischen Anschlussteils (18) größenmäßig zugeschnitten und geformt ist, welches am Rasenmäherende des Elektrokabels (14) vorgesehen ist.

9. Rasenmäher nach einem der Ansprüche 6 bis 8, welcher zudem einen aufrechten Knopf (16) umfasst, welcher auf der kreisförmigen Platte (12) gebildet ist, wobei der Knopf von der Plattenmitte radial versetzt ist.

10. Rasenmäher nach Anspruch 2 oder einem der Ansprüche 3 bis 9, wenn zu Anspruch 2 zugehörig, wobei der Spulenhalter (2) mit einem Schlitz (7) in der Seitenwand gebildet ist, welche die Ausnehmung (5) desselben definiert, wobei der Schlitz für das Elektrokabel ein Mittel bildet, um in den Lagerbereich der Spule (11) zu gelangen.

11. Rasenmäher nach Anspruch 10, wobei der Spulenhalter (2) mit einer an den Schlitz (7) angrenzenden Vertiefung (8) gebildet ist, welche zum Aufnehmen eines Elektrosteckers (19) größenmäßig zugeschnitten und geformt ist, welcher am Netzende des Elektrokabels (14) vorgesehen ist.

12. Rasenmäher nach Anspruch 10 oder 11, welcher zudem eine Kabelführung (31), welche in dem an den Schlitz (7) in der Seitenwand des Spulenhalters (2) angrenzenden Deckel (1) befestigt ist.

13. Rasenmäher nach Anspruch 12, wobei die Kabelführung (31) zum Definieren einer Nut (7a) zwischen derselben und dem angrenzenden Abschnitt des Deckels (1) größenmäßig zugeschnitten und geformt ist.

14. Rasenmäher nach Anspruch 13, wobei die Nut (7a) eine Breite aufweist, welche etwas größer als der Durchmesser des Kabels (14) ist.

15. Rasenmäher nach Anspruch 13 oder 14, wobei die Kabelführung (31) mit einem nach unten hervorstehenden Führungselement (34) und der Deckel (1) mit einer das Kabel in Eingriff nehmenden, nach unten verlaufenden Wand (36) gebildet ist, welche bei Anwendung mit dem Führungselement zusammenwirkt, um zu verhindern, dass das Kabel (14) aus der Nut (7a) entweicht, wenn das Kabel auf die Spule aufgewickelt oder von der Spule abgewickelt wird.

16. Rasenmäher nach Anspruch 15, wobei das nach unten abhängende Führungselement (34) auf der Seite der Kabelführung (31) vorgesehen ist, welche an die Nut (7a) angrenzt.

17. Rasenmäher nach Anspruch 16, wobei die Kabelführung (31) mit einem zweiten nach unten abhängenden Führungselement (35) versehen ist, welches vom ersten Führungselement (34) beabstandet und auf der von der Nut (7a) entfernten Seite der Kabelführung positioniert ist.

18. Rasenmäher nach Anspruch 17, wobei das erste und zweite Führungselement (34, 35) und die Unterfläche der Kabelführung (31) zwischen denselben gerundete Oberflächen in der Horizontal- und Vertikalebene definieren.

19. Rasenmäher nach einem der Ansprüche 1 bis 18, welcher zudem eine Feder (41) zum Speichern von Energie aufweist, welche während dem Abwickeln des Kabels (14) erzeugt wird, wobei das Freisetzen der Energie zum Wiederaufwickeln des Kabels verwendbar ist.

20. Rasenmäher nach Anspruch 19, wobei die Feder (41) eine Spiralfeder ist, deren eines Ende an der Spule (11) und anderes Ende am Spulenhalter (2) befestigt ist.

21. Rasenmäher nach einem der Ansprüche 1 bis 20, wobei die Spule (11) ein einteiliges oder zweiteiliges Spritzgussteil aus einem Kunststoffmaterial ist.

22. Rasenmäher nach einem der Ansprüche 1 bis 21, wobei der Spulenhalter (2) ein einteiliges Gussteil aus einem Kunststoffmaterial ist.

23. Rasenmäher nach Anspruch 21 oder 22, wobei das Kunststoffmaterial ABS oder Polypropylen ist.

## Revendications

1. Tondeuse à gazon comprenant un casier à gazon, une structure de corps principal logeant un moteur électrique et une chambre de coupe et un dispositif de rangement de câble comprenant une bobine (11) pour ranger un câble électrique (14) dans une configuration enroulée, la bobine étant montée de manière rotative dans un support de bobine (2), **caractérisée en ce que** le support de bobine est formé d'une seule pièce avec le casier à gazon de la tondeuse à gazon sur une surface extérieure de celle-ci.

2. Tondeuse à gazon selon la revendication 1, dans laquelle la bobine (11) est montée de manière rotative dans un renfoncement complémentaire (5) formé dans le support de bobine (2).

3. Tondeuse à gazon selon la revendication 1 ou la revendication 2, dans laquelle le casier à gazon est prévu avec un couvercle (1) et le support de bobine (2) fait partie du couvercle.

4. Tondeuse à gazon selon l'une quelconque des revendications 1 à 3, dans laquelle la bobine (11) est constituée d'une paire de plaques d'extrémité (12, 13) et d'un moyeu central.

5. Tondeuse à gazon selon la revendication 4, dans laquelle une plaque d'extrémité (12) est sensiblement circulaire et l'autre plaque d'extrémité (13) est sensiblement annulaire.

6. Tondeuse à gazon selon la revendication 5, dans laquelle la plaque d'extrémité annulaire (13) coopère avec un bossage vertical (6) formé de manière centrale dans le renfoncement (5) du support de bobine (2) de sorte que la plaque d'extrémité annulaire repose sur la base du renfoncement.

7. Tondeuse à gazon selon la revendication 6, dans laquelle le moyeu central de la bobine (11) et le bossage vertical (6) sont formés avec des ouvertures alignées (15, 6a) et dans laquelle la bobine est maintenue de manière rotative à l'intérieur du renfoncement au moyen d'une broche (20) placé dans les ouvertures alignées.

8. Tondeuse à gazon selon la revendication 6 ou la revendication 7, dans laquelle la plaque circulaire (12) est formée avec une partie creuse (17) de taille et de forme à pouvoir abriter un connecteur électrique (18) prévu à l'extrémité du câble électrique (14) relié à la tondeuse à gazon.

9. Tondeuse à gazon selon l'une quelconque des revendications 6 à 8, comprenant en outre un bouton vertical (16) formé sur la plaque circulaire (12), le bouton étant radialement décalé par rapport au centre de la plaque.

10. Tondeuse à gazon selon la revendication 2 ou dans l'une quelconque des revendications 3 à 9 lorsqu'elles dépendent de la revendication 2, dans laquelle le support de bobine (2) est formé avec une fente (7) dans la paroi latérale définissant son renfoncement (5), la fente constituant, pour le câble électrique, les moyens d'accéder à la zone de rangement de la bobine (11).

11. Tondeuse à gazon selon la revendication 10, dans laquelle le support de bobine (2) est formé avec un creux (8) adjacent à la fente (7), le creux étant de taille et de forme à pouvoir abriter une prise électrique (19) prévue aux extrémités principales du câble électrique (14).

12. Tondeuse à gazon selon la revendication 10 ou la revendication 11, comprenant en outre un guide de câble (31) monté dans le couvercle (1) adjacent à la fente (7) dans la paroi latérale du support de bobine (2).

13. Tondeuse à gazon selon la revendication 12, dans laquelle le guide de câble (31) est de taille et de forme telles qu'il définit une rainure (7a) entre lui-même et une partie adjacente du couvercle (1).

14. Tondeuse à gazon selon la revendication 13, dans laquelle la rainure (7a) a une largeur qui est légèrement supérieure au diamètre du câble (14).

15. Tondeuse à gazon selon la revendication 13 ou la revendication 14, dans laquelle le guide de câble (31) est formé avec un élément de guidage faisant saillie vers le bas (34) et le couvercle (1) est formé avec une paroi d'engagement du câble (36) s'étendant vers le bas qui, en utilisation, coopère avec l'élément de guidage pour empêcher le câble (14) de se désengager de la rainure (7a) lorsque le câble est enroulé sur ou déroulé de la bobine.

16. Tondeuse à gazon selon la revendication 15, dans laquelle l'élément de guidage pendant vers le bas (34) est prévu sur ce côté du guide de câble (31) adjacent à la rainure (7a).

17. Tondeuse à gazon selon la revendication 16, dans laquelle le guide de câble (31) est pourvu d'un deuxième élément de guidage pendant vers le bas (35) espacé du premier élément de guidage (34) et positionné sur ce côté du guide de câble éloigné de la rainure (7a).

18. Tondeuse à gazon selon la revendication 17, dans laquelle les premier et deuxième éléments de guidage (34, 35) et la surface inférieure du guide de câble (31) entre eux définissent des surfaces rayonnant sur le plan horizontal et vertical.

19. Tondeuse à gazon selon l'une quelconque des revendications 1 à 18, comprenant en outre un ressort (41) pour emmagasiner l'énergie produite lorsque le câble (14) est déroulé, la libération de ladite énergie pouvant être utilisée pour enrouler de nouveau le câble.

20. Tondeuse à gazon selon la revendication 19, dans laquelle le ressort (41) est un ressort d'horlogerie, dont une extrémité est fixée à la bobine (11), l'autre extrémité étant fixée au support de bobine (2).

21. Tondeuse à gazon selon l'une quelconque des revendications 1 à 20, dans laquelle la bobine (11) est un moulage par injection monobloc ou en deux pièces d'un matériau plastique.

22. Tondeuse à gazon selon l'une quelconque des revendications 1 à 21, dans laquelle le support de bobine (2) est un moulage monobloc d'un matériau plastique.

23. Tondeuse à gazon selon la revendication 21 ou la revendication 22, dans laquelle le matériau plastique est de l'ABS ou du polypropylène.
